(19) **Europäisches Patentamt European Patent Office Office européen des brevets**

(11) **EP 3 327 970 A1**

(12) **EUROPEAN PATENT APPLICATION**

(43) Date of publication:
**30.05.2018 Bulletin 2018/22**

(51) Int Cl.:
***H04L 5/00*** *(2006.01)*

(21) Application number: **16290222.5**

(22) Date of filing: **28.11.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Alcatel Lucent 91620 Nozay (FR)**

(72) Inventors:
• **Atawia, Ramy**
  **2018 Antwerpen (BE)**
• **Ligata, Amir**
  **2018 Antwerpen (BE)**
• **Gacanin, Haris**
  **2018 Antwerpen (BE)**

(74) Representative: **IP HILLS NV Hubert Frère-Orbanlaan 329 9000 Gent (BE)**

(54) **MULTI-BAND EXTENDED WI-FI NETWORK**

(57) According to an embodiment, the disclosure relates to a system (140) for allocating frequency bands in a Wi-Fi network comprising an Access Point (101), a range extender (111) and Wi-Fi stations (121-125). The system comprises a collection module (141) for collecting the stations', access point's and extender's achievable throughputs and the station's and extender's front-haul throughput demands. The system comprises a selection module (142) for selecting a frequency band for each station such that a maximum network throughput is achieved while the throughput of the front-haul and back-haul link of the extender covers the throughput demand of the connected stations, and the throughput demand of the extender is covered by the access point, and the throughput demand of the stations connected to the access point does not exceed the delivered throughput of the access point.

Fig. 1

EP 3 327 970 A1

**Description**

**Technical Field**

The present disclosure generally relates to Wi-Fi networks comprising an access point, AP, Wi-Fi stations, STAs, and at least one range extender, wherein the AP and range extender are operable in at least two frequency bands, e.g., the 2.4GHz and 5GHz frequency band. More particular, the invention relates to the allocation of the operating frequency bands to the network devices in such Wi-Fi networks.

A wireless repeater or range extender takes an existing wireless signal from the access point and rebroadcasts it to create a second network. This way Wi-Fi stations that are out of reach of the access point can still be connected by the range extender that bridges the signal from the station to the access point. In this disclosure, the wireless link from the range extender to the access point is further referred to as the back-haul and the wireless link from the range extender to the connecting stations as the front-haul. When a range extender is operable in two different frequency bands, the front-haul and back-haul can use any of these frequency bands.

**Background**

Typically, the frequency bands of the extender's back-haul and front-haul interface are set manually, for example by the network operator or the user, or automatically by the device.

In US2015/0055566A1 a single band allocation scheme is provided which allocates the STAs to either the AP or range extender according to an optimal scheme.

In both US2011/0235591A1 and US20120275320A1 a band steering scheme is disclosed for single band range extenders.

**Summary**

A problem with the first solution above is that manual band selection does not result in an optimal solution that satisfies all the users requirements in terms of throughput demand.

A problem with the other solutions is that they do not address the multi-band scenario where both AP, STAs and range extender have dual band capabilities.

It is an object of the present disclosure to alleviate these problems and to provide a solution that achieves an optimal throughput in an extended multi-band Wi-Fi network.

This object is achieved, according to a first aspect, by a computing system for allocating frequency bands in a Wi-Fi network comprising an Access Point, AP, one or more range extenders and Wi-Fi stations, STAs. The system further comprises:

- a collection module configured to collect the STAs', AP's and range extenders' achievable throughputs on each frequency band and the STAs' and extenders' front-haul throughput demands; and
- a selection module configured to select a frequency band for each STA such that a maximum network throughput is achieved while :

  o the throughput of the front-haul and back-haul link of the extenders cover the throughput demand of the STAs connected to the respective extender; and
  o the throughput demand of the extenders is covered by the AP; and
  o the throughput demand of the STAs connected to the AP does not exceed the delivered throughput of the AP on each respective frequency band; and

- an execution module configured to allocate the selected frequency bands to the STAs, AP and range extenders.

The network throughput, i.e., the throughput between the Wi-Fi network and the wired or wireless network to which the AP provides access, is thus the parameter used for allocating the frequency bands to all STA's and range extenders in the Wi-Fi network. However, certain conditions need to be fulfilled. First, the frequency band of the extender's front-haul and back-haul and of the STAs connected to the extenders must be selected such that the throughput demand of the STAs connected to the extenders are fulfilled. Second, the frequency bands used for connecting the AP to the extenders must be selected such that the throughput demand of the extenders themselves and thus the throughput demand of all STAs connected to the extenders is also fulfilled. Third, the frequency band of the STAs connected directly to the AP must be selected such that total throughput demand of all STAs on each frequency band can be fulfilled by the AP.

By this combination of maximizing the network throughput under these conditions an optimal frequency band allocation satisfying all throughput demands is achieved. This way, the optimal throughput and connectivity characteristics of each frequency band are taken into account for the entire network. For example, an optimal selection can be made between the 2.4GHz band that delivers higher transmissions ranges and the 5GHz band that enables higher achievable throughput due to lower interference and less congested medium.

The execution module may be further configured to only allocate the selected frequency bands when the current frequency band allocation is not satisfying the STAs' throughput demands.

This way, excessive network downtime is avoided. Even if the overall network throughput could be increased by a new allocation scheme, it will not be applied when all STAs' throughput demands are still satisfied.

Alternatively, the execution module may be further configured to only allocate the selected frequency bands according to a trade-off between throughput gains of the STAs and a number of service interruptions when the allocation would be performed.

In other words, a new allocation scheme will not necessarily be applied if a higher throughput can be achieved for the STAs. The re-allocation will only be performed if the gain in throughput is worth the service interruptions due to the re-allocation. This way, the overall quality of experience of the users is increased. The trade-off itself may be chosen according to the network operator's preferences, i.e., focus on throughput but with more interruptions or focus on uptime of the network but with not always the maximum achievable throughput.

According to an embodiment, the computing system further comprises a triggering module configured to trigger the selection and execution module upon an event.

This way, the processing efficiency and thus the energy efficiency of the computing system and monitored devices increases because the optimization scheme is only ran upon occurrence of a certain event and not continuously.

The triggering module may for example comprise a timer for generating a timeout event as the event. This way a trade-of between efficiency and optimal allocation can be offered to the Wi-Fi operator.

Alternatively or complementary, the event may be an arrival of a new STA in the wireless network. This way, a new station directly receives the optimal frequency band and the frequency band of the other STAs may be re-allocated if the new station would influence their throughput.

Alternatively or complementary the event may be a change in channel characteristics between a STA and the AP or the one or more range extenders, for example a change in signal strength and/or a change in a number of packet retransmissions.

A change in signal strength or retransmissions is an indication that the achievable throughput of a STA may have changed. It is thus an advantage that the optimization scheme automatically adapts to the changing network environment.

According to an embodiment, the selection module is further configured to select the frequency band for each STA such that a maximum network throughput is achieved while the back-haul throughput of each of the one or more range extenders is equal or greater than the front-haul throughput. This way, no excessive throughput is allocated to the front-haul while the back-haul would not be able to consume it.

According to an embodiment, the selection module is further configured to select the frequency band for each STA such that a maximum network throughput is achieved while a total delivered throughput to all STAs in a frequency band does not exceed the AP's total throughput in that frequency band.

According to a second aspect, the disclosure relates to a method for allocating frequency bands in a Wi-Fi network comprising an Access Point, AP, one or more range extenders and Wi-Fi station, STAs; the method comprising the following steps:

- collecting the STAs', AP's and range extenders' achievable throughputs on each frequency band, the STAs' and extenders' front-haul throughput demands;
- selecting a frequency band for each STA such that a maximum network throughput is achieved while :

    o the throughput of the front-haul and back-haul link of the extenders cover the throughput demand of the STAs connected to the respective extender; and
    o the throughput demand of the extenders is covered by the AP; and
    o the throughput demand of the STAs connected to the AP does not exceed the delivered throughput of the AP on each respective frequency band.

According to a third aspect, the disclosure relates to a computer program product comprising a computer-executable instructions for performing the method according to the second aspect when the program is run on a computer.

According to a fourth aspect, the disclosure relates to a computer readable storage medium comprising the computer program product according to third aspect.

According to a fifth aspect, the disclosure relates to a data processing system programmed for carrying out the method according to the second aspect.

## Brief Description of the Drawings

Fig. 1 illustrates a computing system according to an embodiment of the invention and an extended Wi-Fi network; and

Fig. 2 illustrates steps performed for allocating frequency bands to devices in a Wi-Fi network according to an embodiment of the invention; and

Fig. 3 illustrates steps performed for allocating frequency bands to devices in a Wi-Fi network according to an embodiment of the invention; and

Fig. 4A illustrates signal strength values in two frequency bands in different locations of a Wi-Fi network; and

Fig. 4B illustrates the front-haul throughput of a range extender in two different frequency bands in different locations of a Wi-Fi network; and

Fig. 5A illustrates an allocation of frequency bands to STAs and range extenders in a Wi-Fi network before optimization; and

Fig. 5B illustrates an allocation of frequency bands to STAs and range extenders in a Wi-Fi network after an optimized allocation of the frequency bands by a method according an embodiment of the invention; and

Fig. 6 illustrates a suitable computing system for performing steps according to embodiments of the invention.

## Detailed Description of Embodiment(s)

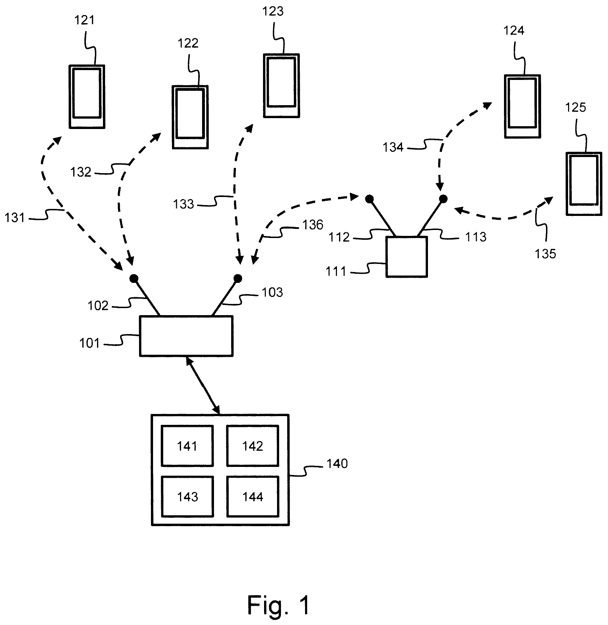

Fig. 1 illustrates a Wi-Fi network comprising an access point (AP) 101, wireless stations or clients (STAs) 121-125 and a range extender 111. Fig. 1 further illustrates a computing system 140 according to an embodiment of the invention. The AP comprises two wireless interfaces 102 and 103 each operating at a different frequency band, e.g., the 2.4GHZ and 5GHz frequency band. Similarly, the extender 111 comprises two wireless interfaces 112 and 113, each also operable at two different frequency bands. In the example of Fig. 1, STAs 121 and 122 are connected to the AP 101 by the respective wireless links 131 and 132 over the first frequency band and STA 123 is connected to the AP 101 by the wireless link 133 over the second frequency band. The back-haul of range extender 111 is established by the wireless link 136 over wireless interface 112 over the second frequency band. The front-haul of range extender is established by the wireless links 134, 135 with respective STAs 124 and 125 over the first frequency band. This exemplary wireless network will be used further in this disclosure to illustrate the functionality of computing system 140.

Computing system 140 comprises a collection module 141 configured to collect the STAs' 121-125, AP's 101 and range extender's 111 achievable throughputs on each frequency bands and the STAs' 124-125 and extender's front-haul throughput demands. In order to do so, computing system has access to this information either by direct communication with the respective devices or by collecting the information at a centralized location, for example in the AP 101 or range extender 111. Computing system 140 may further be embedded within AP 101, range extender 111 or any one of the STAs 121-125.

Computing system 140 further comprises a selection module 142 to select an appropriate frequency band for each STA 121-125 and for the front-haul and back-haul link. The selection module 142 selects these frequency bands such that a maximum network throughput is achieved while guaranteeing all the collected throughput demands and taking into account the achievable throughputs as provided by the collection module.

Computing system 140 further comprises an execution module 143 configured to allocate or apply the selected frequency bands to the STAs, AP and range extender. This applying may be performed in the same way as how the information was collected by the collection module 141.

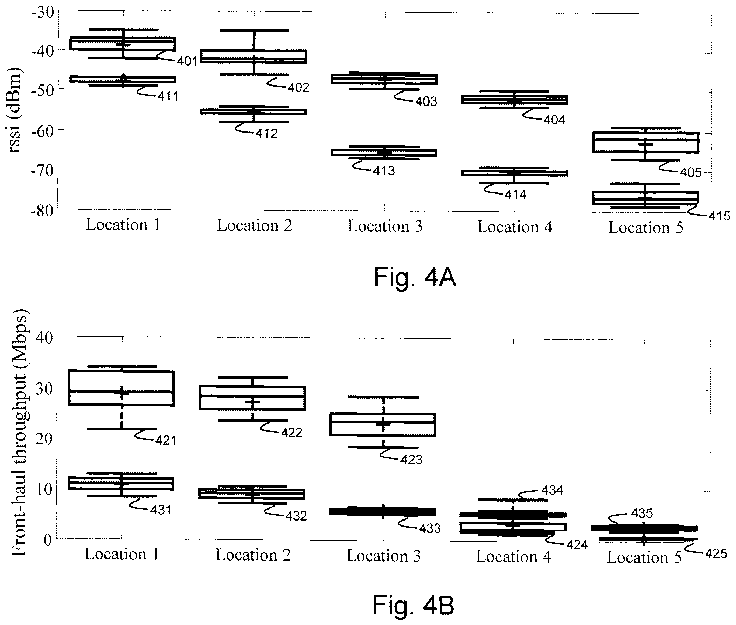

By selecting the frequency bands according to an overall network throughput optimization scheme, the overall efficiency of the Wi-Fi network is maximized. This is due to the fact that the optimal frequency band is not the same for each STA or range extender. This is illustrated by Fig. 4A and Fig. 4B. Fig. 4A illustrates the RSSI or Received Signal Strength Indication Values measured at different locations in a Wi-Fi network in each of the frequency bands. Fig. 4B illustrates the achievable throughput in Mbps in the same locations in each of frequency bands. The value ranges 401 to 405 and 421 to 425 illustrate measurements in the 2.4GHz frequency band and the value ranges 411 to 415 and 431 to 435 illustrate measurements in the 5GHz frequency band. From these plots it can be derived that the highest throughput is achieved in the 5GHz frequency band for locations 4 and 5 and in the 2.4GHz frequency band for locations 1, 2 and 3.

Optionally, computing system 140 further comprises a triggering module 144 for activating the other module 141, 142 and 143 upon the occurrence of a certain event.

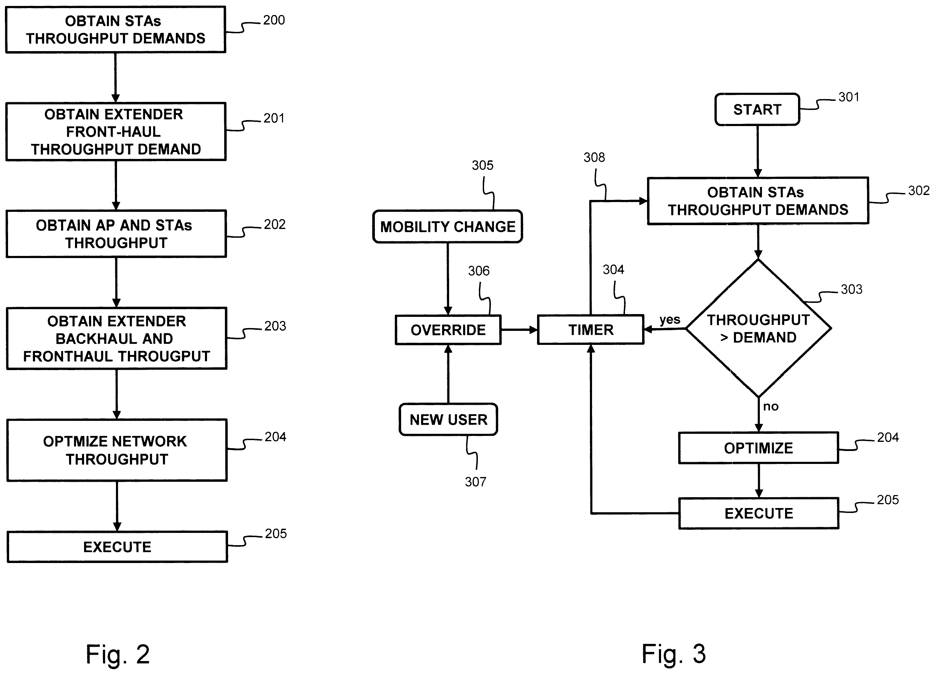

Fig. 2 illustrates steps 200 to 205 as performed by the different modules 141-143 of computing system 140 according to an embodiment of the invention. In a first step 200, collection module 141 obtains the throughput demands of the STA's 121-125, i.e., the needed throughput. These demands may for example be estimated based on network counters that are available in the STAs or AP. A first example of such a network counter is the access category queue size where the total size of the queues is an indication of the throughput demand satisfaction of the respective STA. A second example of such a network counter is the total number of transmitted or received bytes. These counters are standardized by the Broadband Forum TR-181 standard and can be retrieved by the following attributes:

- *Device. WiFi.AccessPoint{i}.AC.{i}.OutQLenHistogramIntervals*
- *Device. WiFi.AccessPoint. {i}.AC.{j}.Stats. OutQLenHistogram*
- *Device.WiFi.AccessPoint.{i}:AssociatedDevice.{j}.Stats.BytesSent*
- *Device. WiFi. AccessPoint. {i}. AssociatedDevice.{j}.Stats.BytesReceiv ed*

The method then proceeds to step 201 and the collection module 141 retrieves or obtains the extender's front-haul throughput demand. These may be retrieved in a similar way as the STAs throughput demands in step 200.

The method then proceeds to step 202 and the collection module 141 retrieves or obtains the achievable throughput of the AP 101 and STAs 121-125 in each frequency band. Similarly, in step 203, the collection module retrieves the achievable throughput of the extender's back-haul and front-haul. These values may also be collected by the last downlink and uplink rate attributes as specified in the Broadband Forum TR-181 standard:

- *Device.WiFi.AccessPoint.{i}. AssociatedDevice. {j}. LastDataDownlinkRat e*
- *Device.WiFi.AccessPoint.{i}.AssociatedDevice.{j}.LastDataUplinkRate*

When all the throughput demands and achievable throughputs are collected, the method proceeds to step 204 where the selection module determines the optimal frequency band for the extender and STAs. In order to do so, the following variables and constraints are defined:

- a set of N users are connected directly to the AP; and
- each user $i \in N$ has a minimal demand per second denoted by $\gamma_i$; and
- one extender is serving one user; and
- the extender has a front-haul throughput denoted by $\gamma_f^{(E)}$; and
- the set of supported bands is denoted by W, and the index of each band is $\omega \in W$; and
- there are two different frequency bands; and
- $\delta_{i,\omega}$ equals to 1 if user i is communicating with the AP on band w, and equals 0 otherwise; and
- $\alpha^{(E)}_{b,\omega}$ which equals to 1 if the extender's backhaul link is using band $\omega$, and equals 0 otherwise; and
- $c_{i,\omega}$ denotes the maximum throughput of each STA from the set N operating in frequency band $\omega$; and
- $c^{(E)}_{b,\omega}$ and $c^{(E)}_{f,\omega}$ denotes the maximum throughput of the extender's respective back-haul and front-haul when operating in frequency band $\omega$; and
- $t_{i,\omega}$, $t^{(E)}_{b,\omega}$ are $t^{(E)}_{f,\omega}$ are the AP's allocated airtime fractions to the respective STAs i, extender's back-haul and front-haul on frequency band $\omega$; and
- $r_{i,\omega}$, $r^{(E)}_{b,\omega}$ and $r^{(E)}_{f,\omega}$ are the delivered throughput at respectively the STAs i, the extender's back-haul and front-haul on frequency band $\omega$.

The selection of the frequency bands for the STAs and extender are then performed under the following constraints:

i) The extender's demand satisfaction constraint (front-haul demand) which ensures that the throughput of the front-haul on the selected band surpasses the demand:

$$\sum_{\omega \in W} r^{(E)}_{f,\omega} \alpha^{(E)}_{f,\omega} \geq \gamma^{(E)}_f$$

ii) The extender's backhaul-fronthaul constraint that models the forwarding strategy of the extender and states that the front-haul throughput is always limited by that of the back-haul:

$$\sum_{\omega \in W} r^{(E)}_{f,\omega} \alpha^{(E)}_{f,\omega} \le r^{(E)}_{b,\omega} \alpha^{(E)}_{b,\omega}$$

iii) The maximum number of bands associated to each of the front-haul and backhaul links of the extender should be limited to only one:

$$\sum_{\omega \in W} \alpha^{(E)}_{b,\omega} = 1$$

$$\sum_{\omega \in W} \alpha^{(E)}_{f,\omega} = 1$$

iv) The AP's users demand satisfaction constraint similar to the extender under i):

$$\sum_{\omega \in W} r_{i,\omega} \delta_{i,\omega} \ge \gamma_i, \forall i \in N$$

v) The maximum number of bands for each user:

$$\sum_{\omega \in W} \delta_{i,\omega} = 1, \forall i \in N$$

vi) The total delivered throughputs to all users on a certain band should not exceed the total AP's throughput $R_\omega$ on that band:

$$\left( \sum_{i \in N} (r_{i,\omega} \delta_{i,\omega}) + r_{b,\omega} \alpha_{b,\omega} + r_{f,\omega} \alpha_{f,\omega} \right) \le R_\omega, \forall \omega \in W$$

Under the above constraints i) to vi), more than one frequency band allocation may be applicable. In such case, the allocation that has the highest total delivered network throughput is selected by maximizing the network throughput expressed by the following equation:

$$\sum_{\omega \in W} \left( \sum_{i \in N} (r_{i,\omega} \delta_{i,\omega}) + r_{f,\omega} \alpha_{f,\omega} \right)$$

In order to obtain a band allocation that satisfies the above constraints and maximization, several mathematical optimization techniques, exhaustive searching or greedy heuristics may be used. In exhaustive search, all the possible combinations of the binary decision variables, i.e., $\delta_i$, $\omega$, $\alpha^{(E)}_{b,\omega}$ and $\alpha^{(E)}_{f,\omega}$, are tested and checked for all the constraints.

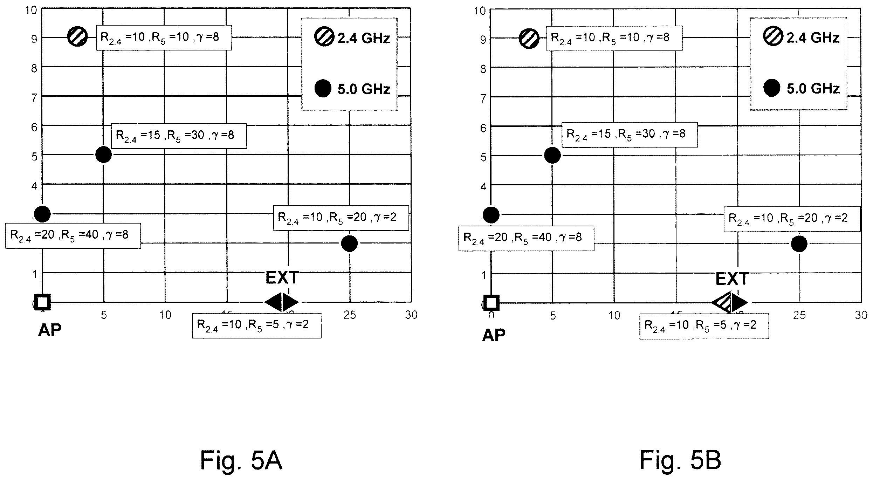

Fig. 5A and Fig. 5B illustrate simulation results of the above selection procedure in a typical Wi-Fi network with one AP and one extender. Both solutions satisfy all the constraints, but only the solution shown in Fig. 5B is the optimal one since it results in a higher total network throughput (around 35 Mbps).

When the optimal frequency band allocation is selected, the method proceeds to step 205 and the execution module 143 allocates the selected frequency bands to the STAs and extender. The configuration may be applied remotely through remote management capabilities as specified in the IEEE 802.11v standard.

Optionally, the execution module may first calculate the amount of interruptions that would result from applying the new allocation and compare this amount with the actual throughput gain that would be achieved. This may be done in the following way, If the total network throughput of the frequency band allocation is denoted as T and the anticipated throughput of the selected frequency band allocation as calculated under step 204 is denoted by T*, then the gain G in throughput gain may be expressed as

$$G = (T^* - T)/T.$$

The service interruptions may be calculated as a function of the normalized number of frequency band switches for all STAs and the extender by the following equation:

$$R = (\sum_\omega \sum_i | \delta_{i, \omega} - \delta^*_{i, \omega} | + \sum_\omega |\alpha^{(E)}_{b, \omega} - \alpha^{*(E)}_{b, \omega}| + \sum_\omega |\alpha^{(E)}_{f, \omega} - \alpha^{*(E)}_{f, \omega}|)/(N+1)$$

wherein the variables denoted with an asterisk (*) indicate the value after the optimization step 204, whereas the variables without asterisk indicate the values before optimization step 204.

The selected configuration will then only be applied by the execution module when

$$G/R > C,$$

Wherein C is constant number that models the trade-off between the throughput gain G and number of service interruptions R.

Fig. 3 illustrates further steps performed by computing system 140 according to an embodiment of the invention. The further steps are performed by triggering module 144 which determines if and when the steps 200 to 205 should be initiated. When the system is initialized 301, the STAs actual throughput and throughput demands are retrieved, for example by execution of the steps 200 and 202. The method then proceeds to step 303 where it is checked if the current throughput exceeds the current demand for every STA. If this is the case, it is not necessary to optimize the current frequency band allocation and the method proceeds to step 304 where a timer is programmed to elapse after a certain time. When the timer elapses, the method proceeds back to step 302. If the outcome of step 303 is that the current throughput does not exceed the throughput demand, then the method proceeds to step 204, i.e., the optimization process as explained above with reference to Fig. 2 is performed. After performing step 205, the method also proceeds to step 304 and programs the timer to elapse after a certain amount of time.

The timer may further be overridden under step 306, i.e., the method is forced to proceed 308 to step 302 although the timer has not yet lapsed. The overriding step 306 is performed upon the occurrence of a certain event. Such an event may for example be the occurrence 307 of a new STA in the Wi-Fi network. Such an occurrence may be detected by the detection of a change in network counters related to the number of associated devices per AP, for example by monitoring the following attribute:

*Device.WiFi.AccessPoint.{i}.AssociatedDeviceNumberOfEntries*

Another event may also a change in the throughput or mobility 305 of a STA. Such an event may be detected by monitoring the RSSI or retransmissions values of the network counters:

*Device. WiFi.AccessPoint.{i}.AssociatedDevice.{i}.SignalStrength*
*Device. WiFi.AccessPoint.{i}.AssociatedDevice.{i}.Retransmissions*

A significant change in any of these two counters will result in adapting the modulation and coding scheme of the respective STA and thus the achievable throughput.

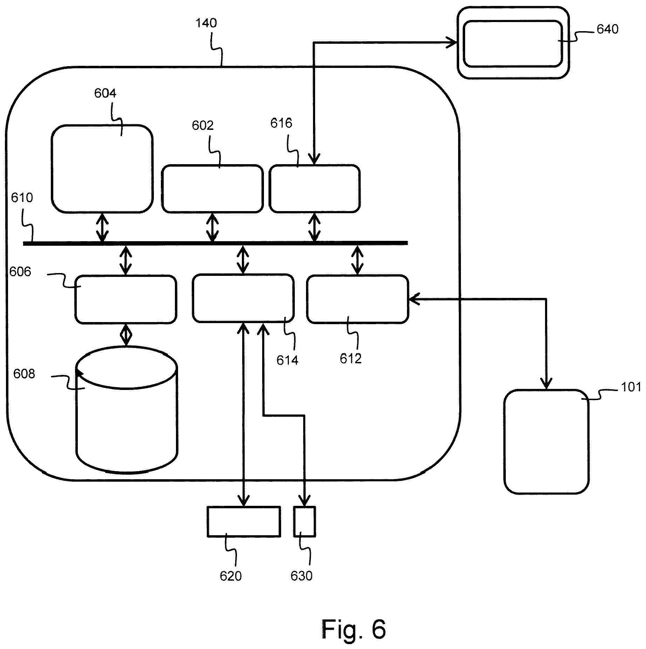

Fig. 6 shows the computing system 140 according to an embodiment of the invention. Computing system 140 is suitable for performing the steps according to the above embodiments. Computing system 140 may also be incorporated in or used as access point 101 or range extender 111. Computing system 140 may in general be formed as a suitable general purpose computer and comprise a bus 610, a processor 602, a local memory 604, one or more optional input interfaces 614, one or more optional output interfaces 616, a communication interface 612, a storage element interface 606 and one or more storage elements 608. Bus 610 may comprise one or more conductors that permit communication among the components of the computing system 140. Processor 602 may include any type of conventional processor or microprocessor that interprets and executes programming instructions. Local memory 604 may include a random access memory (RAM) or another type of dynamic storage device that stores information and instructions for execution by processor 602 and/or a read only memory (ROM) or another type of static storage device that stores static information and instructions for use by processor 602. Input interface 614 may comprise one or more conventional mechanisms that permit an operator to input information to the computing device 140, such as a keyboard 620, a mouse 630, a pen, voice recognition and/or biometric mechanisms, etc. Output interface 616 may comprise one or more conventional mechanisms that output information to the operator, such as a display 640, etc. Communication interface 612 may comprise any transceiver-like mechanism such as for example one or more Ethernet interfaces that enables computing system 140 to communicate with other devices and/or systems, for example with access point 101. The communication interface 612 of computing system 140 may be connected to such another computing system by means of a local area network (LAN) or a wide area network (WAN) such as for example the internet. Storage element interface 606 may comprise a storage interface such as for example a Serial Advanced Technology Attachment (SATA) interface or a Small Computer System Interface (SCSI) for connecting bus 610 to one or more storage elements 608, such as one or more local disks, for example SATA disk drives, and control the reading and writing of data to and/or from these storage elements 608. Although the storage elements 608 above is described as a local disk, in general any other suitable computer-readable media such as a removable magnetic disk, optical storage media such as a CD or DVD, -ROM disk, solid state drives, flash memory cards, ... could be used. The system 140 described above can also run as a virtual machine above the physical hardware.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1. A computing system (140) for allocating frequency bands in a Wi-Fi network comprising an Access Point (101), AP, one or more range extenders (111) and Wi-Fi stations (121-125), STAs; the system comprising:

   - a collection module (141) configured to collect (200, 201, 202, 203) the STAs', AP's and range extenders' achievable throughputs on each frequency band and the STAs' and extenders' front-haul throughput demands; and
   - a selection module (142) configured to select (204) a frequency band for each STA such that a maximum network throughput is achieved while :

     o the throughput of the front-haul and back-haul link of the extenders cover the throughput demand of the STAs connected to the respective extender; and
     o the throughput demand of the extenders is covered by the AP; and
     o the throughput demand of the STAs connected to the AP does not exceed the delivered throughput of the AP on each respective frequency band; and

- an execution module (143) configured to allocate the selected frequency bands to the STAs, AP and range extenders.

2. Computing system according to claim 1 wherein the execution module (143) is further configured to only allocate the selected frequency bands when (303) the current frequency band allocation is not satisfying the STAs' throughput demands.

3. Computing system according to claim 1 wherein the execution module is further configured to only allocate the selected frequency bands according to a trade-off between throughput gains of the STAs and a number of service interruptions when the allocation would be performed.

4. Computing system according to claim 1 further comprising a triggering module (144) configured to trigger (308) the selection and execution module upon an event.

5. Computing system according to claim 4 wherein the triggering module further comprises a timer (304) for generating a timeout event as the event.

6. Computing system according to claim 4 wherein the event is an arrival (307) of a new STA in the wireless network.

7. Computing system according to claim 4 wherein the event is a change (305) in channel characteristics between a STA and the AP or the one or more range extenders, for example a change in signal strength and/or a change in a number of packet retransmissions.

8. Computing system according to claim 1 wherein the selection module is further configured to select the frequency band for each STA such that a maximum network throughput is achieved while:

   - the back-haul throughput of each of the one or more range extenders is equal or greater than the front-haul throughput.

9. Computing system according to claim 1 wherein the selection module is further configured to select the frequency band for each STA such that a maximum network throughput is achieved while:

   - a total delivered throughput to all STAs in a frequency band does not exceed the AP's total throughput in that frequency band.

10. A method for allocating frequency bands in a Wi-Fi network comprising an Access Point (101), AP, one or more range extenders (111) and Wi-Fi stations (121-125), STAs; the method comprising the following steps:

   - collecting (200-203) the STAs', AP's and range extenders' achievable throughputs on each frequency band, the STAs' and extenders' front-haul throughput demands;
   - selecting (204) a frequency band for each STA such that a maximum network throughput is achieved while:

     o the throughput of the front-haul and back-haul link of the extenders cover the throughput demand of the STAs connected to the respective extender; and
     o the throughput demand of the extenders is covered by the AP; and
     o the throughput demand of the STAs connected to the AP does not exceed the delivered throughput of the AP on each respective frequency band.

11. A computer program product comprising a computer-executable instructions for performing the method according to claim 10 when the program is run on a computer (140).

12. A computer readable storage medium comprising the computer program product according to claim 11.

13. A data processing system (140) programmed for carrying out the method according to claim 10.

EP 3 327 970 A1

Fig. 1

OBTAIN STAs
THROUGHPUT DEMANDS — 200

OBTAIN EXTENDER
FRONT-HAUL
THROUGHPUT DEMAND — 201

OBTAIN AP AND STAs
THROUGHPUT — 202

OBTAIN EXTENDER
BACKHAUL AND
FRONTHAUL THROUGPUT — 203

OPTMIZE NETWORK
THROUGHPUT — 204

EXECUTE — 205

Fig. 2

START — 301

OBTAIN STAs
THROUGHPUT DEMANDS — 302

308

305

MOBILITY CHANGE

306

304

THROUGHPUT
> DEMAND — 303

OVERRIDE → TIMER ←yes

no

OPTIMIZE — 204

NEW USER

EXECUTE — 205

307

Fig. 3

EP 3 327 970 A1

11

Fig. 4A

Fig. 4B

$R_{2.4} =10 , R_5 =10 , \gamma =8$

⊘ 2.4 GHz

● 5.0 GHz

$R_{2.4} =15 , R_5 =30 , \gamma =8$

$R_{2.4} =10 , R_5 =20 , \gamma =2$

$R_{2.4} =20 , R_5 =40 , \gamma =8$

**EXT**

**AP**

$R_{2.4} =10 , R_5 =5 , \gamma =2$

**Fig. 5A**

$R_{2.4} =10 , R_5 =10 , \gamma =8$

⊘ 2.4 GHz

● 5.0 GHz

$R_{2.4} =15 , R_5 =30 , \gamma =8$

$R_{2.4} =10 , R_5 =20 , \gamma =2$

$R_{2.4} =20 , R_5 =40 , \gamma =8$

**EXT**

**AP**

$R_{2.4} =10 , R_5 =5 , \gamma =2$

**Fig. 5B**

Fig. 6

Europäisches
Patentamt

European
Patent Office

Office européen
des brevets

## EUROPEAN SEARCH REPORT

Application Number

EP 16 29 0222

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/271829 A1 (AMINI PEIMAN [US] ET AL) 24 September 2015 (2015-09-24) | 1,2,4-13 | INV. H04L5/00 |
| A | * paragraph [0033] - paragraph [0064] * <br> * figures 3-6 * | 3 | |
| X | WO 2016/014557 A1 (BELKIN INTERNATIONAL INC [US]) 28 January 2016 (2016-01-28) <br> * paragraph [0074]; figure 4 * | 1,10-13 | |

TECHNICAL FIELDS SEARCHED (IPC)

H04L

The present search report has been drawn up for all claims

| Place of search | Date of completion of the search | Examiner |
|---|---|---|
| The Hague | 11 April 2017 | Tejera, Pedro |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 29 0222

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2017

| Patent document cited in search report | Publication date | Patent family member(s) | Publication date |
|---|---|---|---|
| US 2015271829 A1 | 24-09-2015 | CN 104955102 A<br>US 2015271829 A1 | 30-09-2015<br>24-09-2015 |
| WO 2016014557 A1 | 28-01-2016 | US 2016029384 A1<br>WO 2016014557 A1 | 28-01-2016<br>28-01-2016 |

For more details about this annex : see Official Journal of the European Patent Office, No. 12/82

**EP 3 327 970 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20150055566 A1
- US 20110235591 A1
- US 20120275320 A1